# EUROPEAN PATENT SPECIFICATION

(11) **EP 3 162 685 B1**
(45) Date of publication and mention of the grant of the patent: **27.03.2019**
(21) Application number: 14895797.0
(22) Date of filing: 25.06.2014
(51) Int. Cl.: B62K 15/00, B62K 3/00

(54) **FOLDABLE SCOOTER**
FALTBARER MOTORROLLER
TROTTINETTE PLIABLE

(43) Date of publication of application: 03.05.2017
(73) Proprietor: BHBIKES EUROPE, S.L., 01015 Vitoria-Gasteiz (Alava) (ES)
(72) Inventor: BEISTEGUI CHIRAPOZU, José, Luis, E-01015 Vitoria-Gasteiz (Alava) (ES); CUÑADO LANDA, Javier, E-01015 Vitoria-Gasteiz (Alava) (ES)
(74) Representative: Herrero & Asociados, S.L.
(86) International application number: PCT/ES2014/070519
(87) International publication number: WO 2015/197879

(56) References cited:
- CN-A- 103 661 731
- CN-U- 201 613 983
- CN-U- 203 358 778
- DE-A1- 3 138 095
- DE-A1- 10 045 821
- DE-U1- 8 128 047
- DE-U1- 9 403 583
- DE-U1- 29 807 616
- GB-A- 2 477 512
- US-A1- 2003 141 121
- US-A1- 2003 141 121
- US-A1- 2013 033 012
- US-A1- 2014 008 882

## Description

### Object of the Invention

The present invention is comprised in the field of folding scooters.

The object of the present invention is a folding scooter that allows for a simple, comfortable and rapid folding through the central area of the scooter's support platform, taking up minimum space in its final folded position.

### Background of the Invention

A wide range of tricycles, bicycles and scooters of any kind are known on the market today. More specifically, folding cycles are known to allow being more easily transported in the trunk of vehicles, as well as to allow being stored in a small space until they are used again. However, several problems and drawbacks have been detected in relation to folding scooters, among which the followings stand out:
- Scooters are folded today by means of a complete pivoting movement of the entire lower support or support platform for the feet, which entails a height similar to or even greater than the steering bar. This means that the center of mass is located farther away from the ground level, which directly results in stability and safety problems, being able to cause the scooter falling and tipping over in the folded position.
- For folding, scooters require the user to intervene and act on multiple points, pins or hinges of the scooter, turning the folding process into a troublesome, complex and awkward task that is intended to be done by adults, as it is not appropriate for children due to its complexity and/or danger. DE 29807616U discloses such a folding scooter in accordance with the preamble of claim 1.
- For folding, scooters use a hinge on the front steering bar, reducing rigidity of the bar, and thereby involving safety and reliability risks.
- To overcome the problem of the preceding point, scooter manufacturers have been making steering bars with increased thickness, resulting in a heavier scooter as well as substantially increasing economic manufacturing costs.

### Description of the Invention

The present invention solves the drawbacks discussed above by providing a folding scooter, which in addition to taking up minimum space in its final folded position, allows for a simple and rapid folding process through the central area of its support platform, such that said task is more comfortable and manageable, without having to suspend or keep in the air a significant amount of mass of the scooter, which allows for significantly increasing folding safety conditions, preventing possible falls or accidents from occurring while folding.

The folding scooter of the invention comprises at least one pair of front and rear wheels, respectively; a lower support platform, located in an intermediate position between the wheels, and a steering handlebar attached to the at least one front wheel.

More particularly, the lower support platform is foldable in its central area through a hinge element which allows the rotation of each of its two halves until the surfaces of said halves are facing and parallel in the folded position of the scooter.

Additionally, the scooter further comprises: anchoring means configured to allow locking or releasing the scooter in the folded or deployed position thereof; and an operating pedal for driving said anchoring means, said pedal being fixed in the lower portion to the steering handlebar.

It is therefore easier to fold and deploy the scooter, and due to its simplicity, it is even suitable for children to do it, furthermore favoring the transport thereof as if it were a suitcase, so that it can be comfortably dragged and taken around through the wheels of the scooter. The sequence for folding the scooter of the invention will be described below.

Therefore, the operating pedal is located in the front lower area of the steering handlebar, being located in the front position with respect to the normal forward movement direction of the scooter. This makes the folding process easier and improves it with respect to scooters today, without the user having to bow, bend down or adapt strange postures, because the pedal is simply actuated by the user's foot. Furthermore, the fact that the operating pedal is preferably located between the two front wheels and in the lower front part of the steering handlebar allows providing safety and protection of the pedal against the scooter possibly being hit or falling over, which could affect its normal operation.

### Description of the Drawings

To complement the description that is being made and for the purpose of helping to better understand the features of the invention according to a preferred practical embodiment thereof, a set of drawings is attached as an integral part of said description in which the following is depicted with an illustrative and non-limiting character:
Figure 1A - 1D show the folding sequence for the scooter object of the invention.
Figure 2 shows a front perspective view of the folding scooter of the invention in the normal deployed position, suitable for use.
Figure 3 shows the scooter in an intermediate folded position, the support platform taking on a reverse V shape being seen.
Figure 4 shows a perspective view of the scooter in the final folded position, with the two halves of the support platform facing one another.
Figure 5 shows a detailed view front in which the pedal and the anchoring means to allow locking/releasing the scooter in the folded and deployed position is observed.
Figure 6 shows a rear perspective view of Figure 5.
Figure 7 shows a side view of the pedal and the anchoring means in a first locking position of the scooter in the deployed position.
Figure 8 shows a side view in which the pedal is being held down to release the anchoring means and rotate the angular part towards a second locking position of the scooter in the folded position.
Figure 9 shows a side view corresponding to the scooter in its completely folded position.

### Preferred Embodiment of the Invention

A preferred embodiment is described below making reference to the drawings mentioned above, without this limiting or reducing the scope of protection of the present invention.

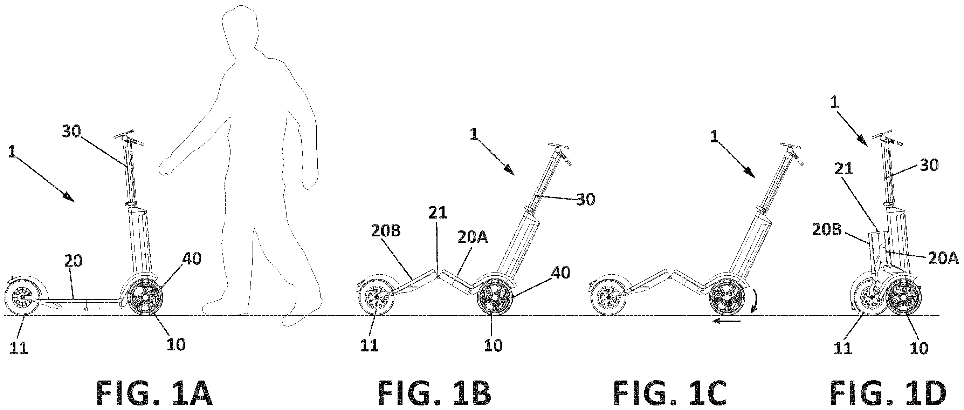

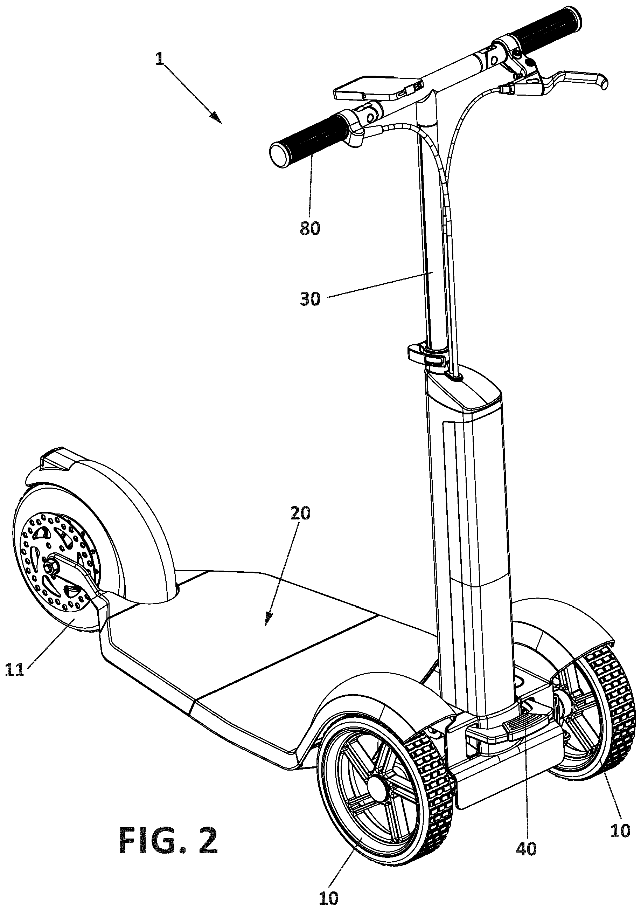

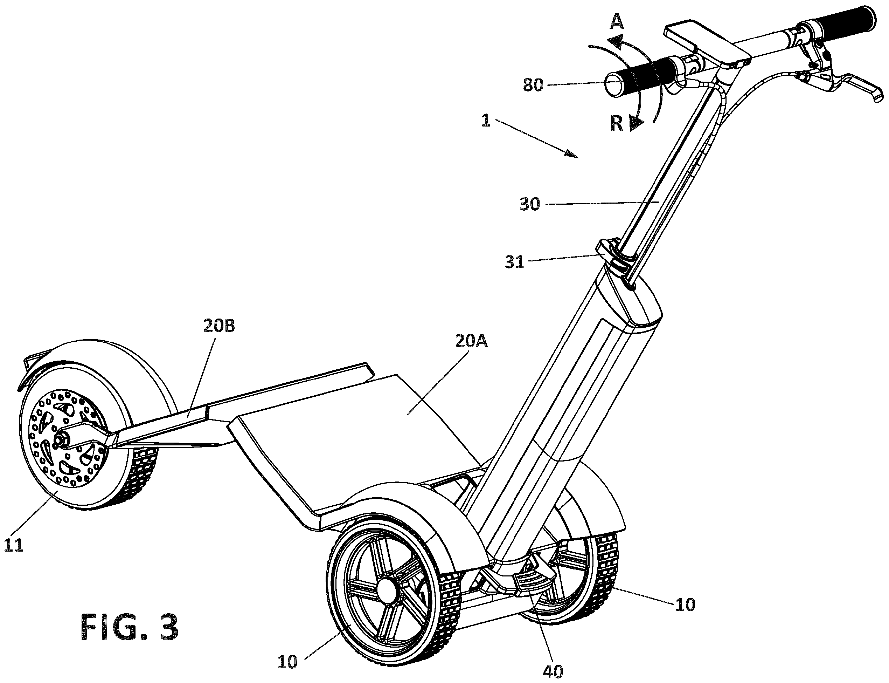

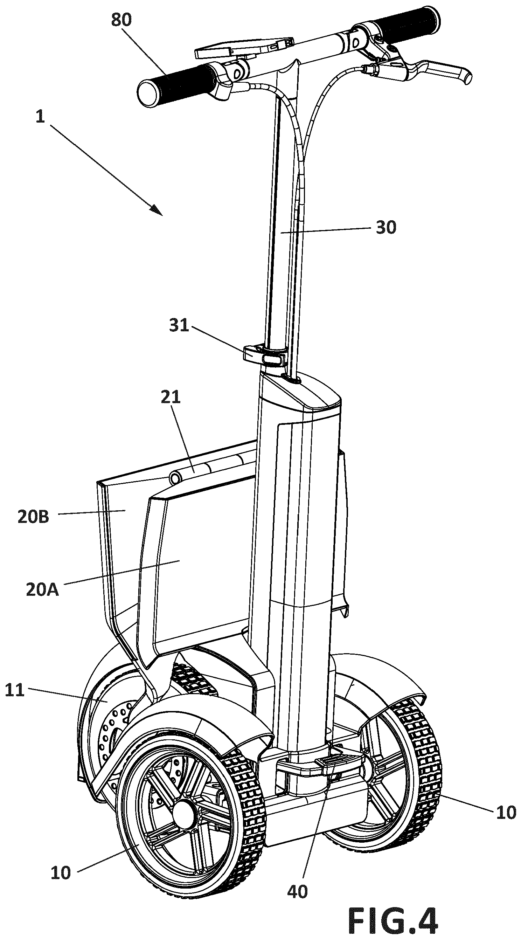

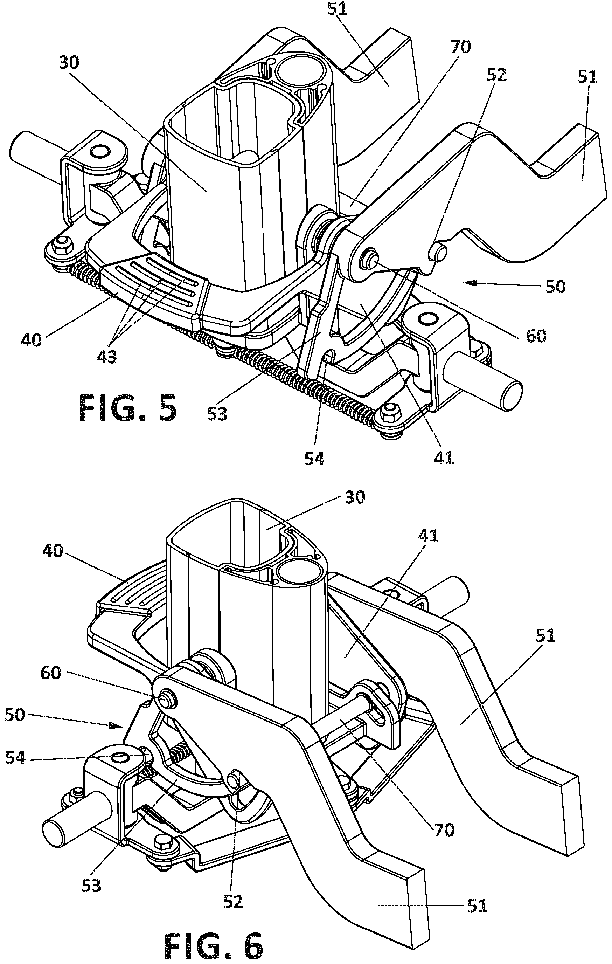

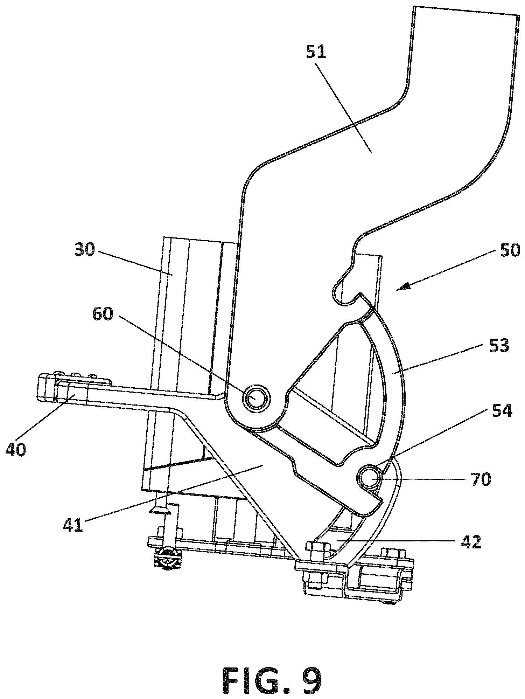

Figures 1A to 1D show a sequence of the different steps to be performed for folding the scooter (1) of the invention, said scooter (1) of the present embodiment being an electric scooter (1) that has a drive motor, not depicted, linked to the rear wheel (11), having two front wheels (10) and one rear wheel (11) in this example, as can be seen in Figure 2. Therefore, the steps for folding the scooter (1) basically comprise:
- slightly tilting the steering handlebar (30) forward about 30° with respect to the front wheels (10), see Figure 3;
- applying the brake to the rear wheel (11);
- stepping on an operating pedal (40), holding it down, which pedal (40) in this embodiment comprises projecting gripping elements (41), shown in Figures 5 to 9, to favor being held down by the user without sliding;
- pushing the scooter (1) backwards, i.e., towards the rear wheel (11);
- letting go of the operating pedal (40) once the complete folded position of the scooter (1) has been reached, as seen in Figure 4.

Furthermore, it has been envisaged that in a semiautomatic operating mode, the scooter (1) can additionally comprise a wireless receiver configured for receiving orders from an external electronic device, such as a smartphone, tablet, portable computer, etc.

In said semiautomatic operating mode, the steps for folding the scooter (1) basically comprise:
- activating the "Fold" mode in the external electronic device;
- slightly tilting the steering handlebar (30) forward about 30° with respect to the front wheels (10), see Figure 3;
- stepping on the operating pedal (40), holding said pedal (40) down;
- actuating an accelerator member (80), such that the rear wheel (11) slowly moves forward (A), see Figure 3, until the scooter (1) reaches the folded position, said forward movement being performed at a constant and preconfigured speed that is programmed in the scooter upon activating the "Fold" mode in the external electronic device, regardless of how the accelerator member is actuated;
- letting go of the operating pedal (40) once the complete folded position of the scooter (1) has been reached, as seen in Figure 4.

The possibility of deploying the scooter by means of a manual operating mode is also contemplated, the steps for which basically comprise:
- stepping on the operating pedal (40), holding said pedal (40) down;
- slightly pushing the steering handlebar (30) backwards to help unlock the mechanism;
- waiting for the scooter (1) to reach the deployed position;
- letting go of the operating pedal (40) once the deployed position of the scooter (1) has been reached.

The possibility of deploying the scooter by means of a semiautomatic operating mode is likewise contemplated, the steps for which basically comprise:
- activating the "Fold" mode in the external electronic device;
- stepping on the operating pedal (40), holding said pedal (40) down;
- slightly pushing the steering handlebar (30) backwards to help unlock the mechanism;
- actuating the accelerator member (80) backwards (R), see Figure 3, such that the rear wheel (11) slowly moves further away until the scooter (1) reaches the deployed position, said movement being performed at a constant and preconfigured speed that is programmed in the scooter upon activating the "Fold" mode in the external electronic device, regardless of how the accelerator member is actuated;
- letting go of the operating pedal (40) once the deployed position of the scooter (1) has been reached.

As discussed above, the folding scooter (1) of the present embodiment comprises two front wheels (10) and one rear wheel (11), further comprising a lower support platform (20), located in an intermediate position between the wheels (10, 11), and a steering handlebar (30) attached to the front wheels (10) and telescopic in this example, having a locking pin (31) for fixing the steering handlebar (30) at the desired height, see Figures 3 and 4.

As can be seen in Figure 3, the lower support platform (20) is foldable in its central area through a hinge element (21) that allows the rotation of each of its two halves (20A, 20B) until the surfaces of said halves (20A, 20B) are facing and parallel in the folded position of the scooter (1). More preferably, the rotation of each of the two halves (20A, 20B) of the platform (20) is a rotation with an approximate angle of +90° with respect to the horizontality of the platform (20).

Furthermore, Figures 5 to 9 show that the folding scooter (1) of the invention further comprises anchoring means (50) operated by the operating pedal (40) to allow locking or releasing the scooter (1) in the folded or deployed position thereof; and an operating pedal (40) for operating said anchoring means (50) fixed in the lower portion to the steering handlebar (30).

Figures 2 to 4 show that the operating pedal (40) is located in the front lower area of the steering handlebar (30), being located in the front position with respect to the normal forward movement direction of the scooter (1). More particularly, Figures 5 and 6 show that the operating pedal (40) is attached to the steering handlebar (30) through a first locking shaft (60) going through the steering handlebar (30) from one side to the other.

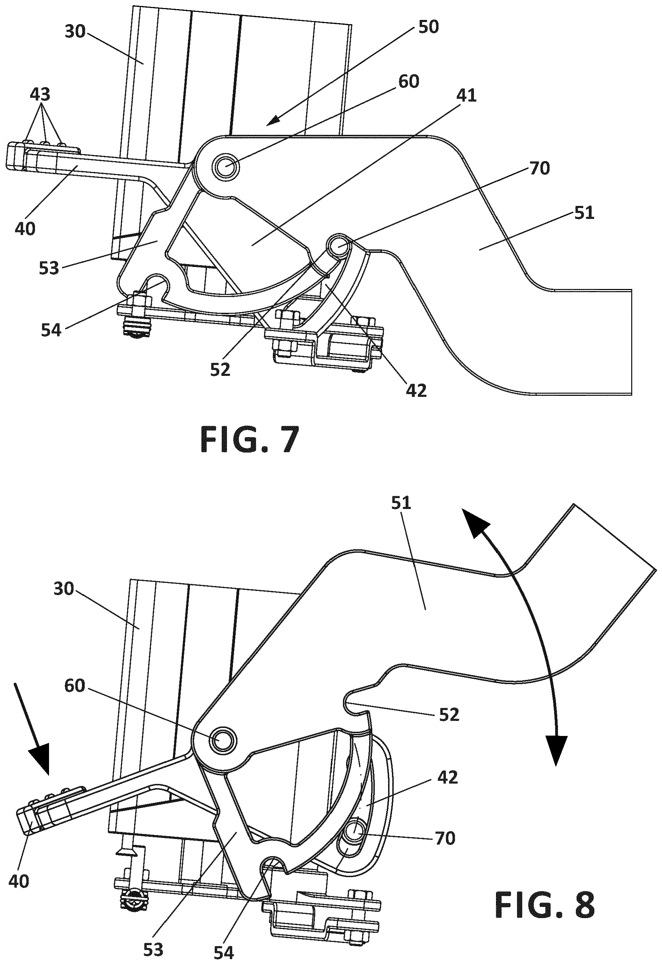

Figures 7 and 8 show that the operating pedal (40) comprises a pair of side prolongations (41) in turn having a groove (42) through which a second locking shaft (70) can move. Said groove (42) is configured as an arc of circumference arranged in a manner that is eccentric to the rotation of the operating pedal (40), such that when said operating pedal is rotated, the second locking shaft (70) moves through said groove (42), away from a first recess (52) in which it is locked in the deployed position, and therefore allowing the rotation of a pair of arms (51).

Furthermore, the anchoring means (50) in turn comprise:
- the pair of parallel swiveling arms (51), see Figures 5 and 6, located on each side of the steering handlebar (30), where said arms (51) comprise the first recess (52) in which the second locking shaft (70) can be inserted for locking the scooter (1) in the deployed position; and
- a pair of angular parts (53), which are likewise swiveling and have a second recess (54) in which the second locking shaft (70) can be inserted for locking the scooter (1) in the folded position.

Finally, though not depicted in the drawings, the possibility of the scooter (1) of the invention being able to incorporate securing means for fixing and maintaining the scooter (1) in the deployed position, in the horizontal direction of the platform (20), is contemplated. More specifically said securing means can comprise permanent magnets and/or a system of resilient springs.

## Claims

1. Folding scooter (1) comprising at least one pair of front and rear wheels (10, 11), respectively; a lower support platform (20), located in an intermediate position between the wheels (10, 11), and a steering handlebar (30) attached to at least one front wheel (10), the lower support platform (20) being foldable in its central area through a hinge element (21) such that it allows the rotation of each of its two halves (20A, 20B) until the surfaces of said halves (20A, 20B) are facing and parallel in the folded position of the scooter (1), the scooter (1) additionally comprising:
- anchoring means (50) configured to allow locking or releasing the scooter (1) in the folded or deployed position thereof, and **characterized in that** it further comprises
- an operating pedal (40) for driving the anchoring means (50), fixed in the lower portion to the steering handlebar (30), the operating pedal (40) is located in the front lower area of the steering handlebar (30), being located in the front position with respect to the normal forward movement direction of the scooter (1), and is attached to the steering handlebar (30) through a first locking shaft (60) going through the steering handlebar (30) from one side to the other, the operating pedal (40) further comprising a pair of side prolongations (41) in turn having a groove (42) through which a second locking shaft (70) can move, and wherein the anchoring means (50) further comprise:
- a pair of parallel swiveling arms (51), located on each side of the steering handlebar (30) where said arms (51) have a first recess (52) in which the second locking shaft (70) can be inserted for locking the scooter (1) in the deployed position, and
- a pair of angular parts (53) which are likewise swiveling and have a second recess (54) in which the second locking shaft (70) can be inserted for locking the scooter (1) in the folded position.

2. Folding scooter (1) according to claim 1, **characterized in that** the groove (42) is eccentric with respect to the rotation of the operating pedal (40).

3. Folding scooter (1) according to any one of the preceding claims, **characterized in that** the operating pedal (40) comprises projecting gripping elements (43) to favor being held down by the user without sliding.

4. Folding scooter (1) according to claim 1, **characterized in that** the rotation of each of the two halves (20A, 20B) of the platform (20) is a rotation with an approximate angle of +90° with respect to the horizontality of the platform (20).

5. Folding scooter (1) according to any one of the preceding claims, **characterized in that** it is an electric scooter that has a drive motor linked to the rear wheel (11).

6. Folding scooter (1) according to claim 5, **characterized in that** it further comprises a wireless receiver for allowing semiautomatic folding of the scooter (1) through orders received from an external electronic device.

7. Folding scooter (1) according to any one of the preceding claims, **characterized in that** the steering handlebar (30) is telescopic, having a locking pin (31) for fixing the steering handlebar (30) at the desired height.

8. Folding scooter (1) according to any one of the preceding claims, **characterized in that** it further comprises securing means for fixing and maintaining the scooter (1) in the deployed position.

9. Folding scooter (1) according to claim 8, **characterized in that** the securing means comprise permanent magnets.

10. Folding scooter (1) according to claim 8, **characterized in that** the securing means comprise a system of resilient springs.

## Patentansprüche

1. Klappbarer Roller (1), umfassend zumindest ein Paar vorderer bzw. hinterer Räder (10, 11); eine untere Trägerplattform (20), die in einer Zwischenposition zwischen den Rädern (10, 11) angeordnet ist, und einen steuerbaren Lenker (30), der mit zumindest einem vorderen Rad (10) verbunden ist, wobei die untere Trägerplattform (20) in ihrem Zentralbereich durch ein Gelenkelement (21) faltbar ist, so dass sie eine Drehung jeder ihrer zwei Hälften (20A, 20B) erlaubt, bis die Flächen der Hälften (20A, 20B) gegenüberliegend und parallel in einer eingeklappten Position des Rollers (1) sind, wobei der Roller (1) weiter umfasst:
- ein Verankerungselement (50), das dazu ausgebildet ist, ein Sperren oder Lösen des Rollers (1) in dessen eingeklappter oder ausgeklappter Position zu ermöglichen, und **dadurch gekennzeichnet, dass** dieses weiter umfasst
- ein in dem unteren Abschnitt an dem steuerbaren Lenker (30) befestigtes Bedienpedal (40), um das Verankerungselement (50) zu steuern, wobei das Bedienpedal (40) in dem vorderen unteren Bereich des steuerbaren Lenkers (30) angeordnet ist, wobei es in der vorderen Position in Bezug auf eine übliche Vorwärtsbewegungsrichtung des Rollers (1) angeordnet und an dem steuerbaren Lenker (30) durch eine Sperrwelle (60), die sich durch den steuerbaren Lenker (30) von einer Seite zu anderen erstreckt, befestigt ist, wobei das Bedienpedal (40) zudem ein Paar seitlicher Verlängerungen (41) umfasst, die wiederum eine Nut (42) aufweisen, durch die eine zweite Sperrwelle (70) bewegbar ist, und wobei das Verankerungselement (50) ferner umfasst:
- ein Paar parallel verschwenkbarer Arme (51), die auf jeder Seite des steuerbaren Lenkers (30) angeordnet sind, wobei die Arme (51) eine erste Vertiefung (52) aufweisen, in die die zweite Sperrwelle (70) eingeführt werden kann, um den Roller in einer ausgeklappten Position zu sperren, und
- ein Paar winkeliger Abschnitte (53), die ebenfalls schwenkbar sind und eine zweite Vertiefung (54) aufweisen, in die die zweite Sperrwelle (70) einführbar ist, um den Roller (1) in einer eingeklappten Position zu sperren.

2. Klappbarer Roller (1) nach Anspruch 1, **dadurch gekennzeichnet, dass** die Nut (42) in Bezug auf die Drehung des Bedienpedals (40) exzentrisch ist.

3. Klappbarer Roller (1) nach einem vorherigen Ansprüche, **dadurch gekennzeichnet, dass** das Bedienpedal (40) vorstehende Gripelemente (43) umfasst, um durch einen Nutzer unten gehalten werden zu können, ohne abzurutschen.

4. Klappbarer Roller (1) nach Anspruch 1, **dadurch gekennzeichnet, dass** die Drehung jeder der zwei Hälften (20A, 20B) der Plattform (20) eine Drehung mit einem annähernden Winkel von +90° in Bezug auf die Horizontalität der Plattform (20) ist.

5. Klappbarer Roller (1) nach einem der vorherigen Ansprüche, **dadurch gekennzeichnet, dass** dieser ein elektrischer Roller ist, der einen Antriebsmotor aufweist, der mit dem hinteren Rad (11) verbunden ist.

6. Klappbarer Roller (1) nach Anspruch 5, **dadurch gekennzeichnet, dass** dieser zudem einen kabellosen Empfänger umfasst, um ein halbautomatisches Klappen des Rollers (1) durch empfangene Befehle von einen externen elektronischen Gerät zu ermöglichen.

7. Klappbarer Roller (1) nach einem der vorherigen Ansprüche, **dadurch gekennzeichnet, dass** der steuerbare Lenker (30) teleskopisch ist und einen Sperrstift aufweist, um den steuerbaren Lenker (30) in der gewünschten Höhe zu arretieren.

8. Klappbarer Roller (1) nach einem der vorherigen Ansprüche, **dadurch gekennzeichnet, dass** dieser zudem Sicherungsmittel umfasst, um den Roller (1) in der ausgeklappten Position zu arretieren und zu halten.

9. Klappbarer Roller (1) nach Anspruch 8, **dadurch gekennzeichnet, dass** die Sicherungsmittel Permanentmagnete umfassen.

10. Klappbarer Roller (1) nach Anspruch 8, **dadurch gekennzeichnet, dass** die Sicherungsmittel ein System aus elastischen Federn umfassen.

## Revendications

1. Trottinette (1) pliable, comprenant au moins une paire de roues (10, 11) avant et arrière, respectivement ; une plateforme (20) inférieure de support, placée dans une position intermédiaire entre les roues (10, 11), et un guidon (30) de direction, fixé à au moins une roue (10) avant, la plateforme (20) inférieure de support étant pliable dans sa région centrale par un élément (21) de charnière, tel qu'il permet la rotation de chacune de ces deux moitiés (20A, 20B) jusqu'à ce que les surfaces des moitiés (20A, 20B) soient en face et parallèles dans la position pliée de la trottinette (1), la trottinette (1) comprenant, en outre :
- des moyens (50) d'ancrage, configurés pour permettre le verrouillage ou le déverrouillage de la trottinette (1) dans sa position pliée ou déployée et **caractérisée en ce qu'**elle comprend, en outre
- une pédale (40) de fonctionnement pour entraîner les moyens (5) d'ancrage, fixée dans la partie inférieure du guidon (30) de direction, la pédale (40) de fonctionnement étant placée dans la région inférieure avant du guidon (30) de direction, étant placée dans la position avant par rapport au sens normal de déplacement vers l'avant de la trottinette (1) et étant fixée au guidon (30) de direction par un premier arbre (60) de verrouillage, traversant le guidon (30) de direction, d'un côté à l'autre,
la pédale (40) de fonctionnement comprenant, en outre, une paire de prolongements (41), ayant à leur tour une rainure (42), dans laquelle un deuxième arbre (70) de verrouillage peut se déplacer et dans laquelle les moyens (50) d'ancrage comprennent, en outre :
- une paire de bras (51) parallèles pivotants, placés de chaque côté du guidon (30) de direction, les bras (51) ayant une première encoche (52), dans laquelle le deuxième arbre (70) de verrouillage peut être inséré pour verrouiller la trottinette (1) dans la position déployée et
- une paire de parties (53) angulaires, qui sont, de la même façon, pivotantes et ont une deuxième encoche (54), dans laquelle le deuxième arbre (70) de verrouillage peut être inséré pour verrouiller la trottinette (1) dans la position pliée.

2. Trottinette (1) pliable suivant la revendication 1, **caractérisée en ce que** la rainure (42) est excentrée par rapport à la rotation de la pédale (40) de fonctionnement.

3. Trottinette (1) pliable suivant l'une quelconque des revendications précédentes, **caractérisée en ce que** la pédale (40) de fonctionnement comprend des éléments (43) agrippants en saillie, pour en favoriser le maintien vers le bas par les utilisateurs sans glisser.

4. Trottinette (1) pliable suivant la revendication 1, **caractérisée en ce que** la rotation de chacune des deux moitiés (20A, 20B) de la plateforme (20) est une rotation d'un angle d'environ +90° par rapport à l'horizontalité de la plateforme (20) .

5. Trottinette (1) pliable suivant l'une quelconque des revendications précédentes, **caractérisée en ce que** c'est une trottinette électrique, qui a un moteur d'entraînement relié à la roue (11) arrière.

6. Trottinette (1) pliable suivant la revendication 5, **caractérisée en ce qu'**elle comprend, en outre, un récepteur sans fil pour permettre un pliage semi-automatique de la trottinette (1) par des ordres reçus d'un dispositif électronique extérieur.

7. Trottinette (1) pliable suivant l'une quelconque des revendications précédentes, **caractérisée en ce que** le guidon (11) de direction est télescopique, en ayant une broche (31) de verrouillage pour fixer le guidon (30) de direction à la hauteur souhaitée.

8. Trottinette (1) pliable suivant l'une quelconque des revendications précédentes, **caractérisée en ce qu'**elle comprend, en outre, des moyens de fixation pour fixer et maintenir la trottinette (1) dans la position déployée.

9. Trottinette (1) pliable suivant la revendication 8, **caractérisée en ce que** les moyens de fixation comprennent des aimants permanents.

10. Trottinette (1) pliable suivant la revendication 8, **caractérisé en ce que** les moyens de fixation comprennent un système de ressorts élastiques.
